(19) Europäisches Patentamt

European Patent Office

Office européen des brevets

(11) **EP 1 183 053 B1**

(12) **EUROPÄISCHE PATENTSCHRIFT**

(45) Veröffentlichungstag und Bekanntmachung des Hinweises auf die Patenterteilung:
**20.04.2005  Patentblatt 2005/16**

(21) Anmeldenummer: **00945896.9**

(22) Anmeldetag: **07.07.2000**

(51) Int Cl.⁷: **A61L 9/04**, A61L 9/14

(86) Internationale Anmeldenummer:
**PCT/EP2000/006462**

(87) Internationale Veröffentlichungsnummer:
**WO 2001/003746 (18.01.2001 Gazette 2001/03)**

(54) **ZUSAMMENSETZUNG UND VERFAHREN ZUR ENTKEIMUNG VON LUFT**

COMPOSITION AND METHOD FOR DISINFECTING THE AIR

COMPOSITION ET PROCEDE D'ASEPTISATION D'AIR

(84) Benannte Vertragsstaaten:
**AT BE CH CY DE DK ES FI FR GB GR IE IT LI LU MC NL PT SE**

(30) Priorität: **07.07.1999  DE 19931185**
**04.04.2000  WOPCT/EP00/02992**

(43) Veröffentlichungstag der Anmeldung:
**06.03.2002  Patentblatt 2002/10**

(73) Patentinhaber: **Schür, Jörg-Peter, Prof.**
**41844 Wegberg-Dalheim (DE)**

(72) Erfinder: **Schür, Jörg-Peter, Prof.**
**41844 Wegberg-Dalheim (DE)**

(74) Vertreter: **Helbing, Jörg, Dr. Dipl.-Chem. et al**
**Patentanwälte**
**von Kreisler-Selting-Werner,**
**Postfach 10 22 41**
**50462 Köln (DE)**

(56) Entgegenhaltungen:
**DE-A- 19 612 340          US-A- 4 977 142**

Bemerkungen:
Die Akte enthält technische Angaben, die nach dem Eingang der Anmeldung eingereicht wurden und die nicht in dieser Patentschrift enthalten sind.

EP 1 183 053 B1

**Beschreibung**

Die vorliegende Erfindung betrifft ein Verfahren zur Entkeimung von Luft, umfassend das Verteilen oder Zerstäuben einer speziellen antimikrobiellen Zusammensetzung, für diesen Zweck geeignete antimikrobielle Zusammensetzungen sowie die Verwendung dieser Zusammensetzungen zur Entkeimung von Luft.

Die Verkeimung der Raumluft ist ein grundsätzliches Problem sowohl in privaten Haushalten und in gewerblichen Bürokomplexen als auch in Betrieben des produzierenden Gewerbes, insbesondere in lebensmittelverarbeitenden Betrieben, auch die Verpackung unterliegt exo- und endogenen Verkeimungen. Zum gegenwärtigen Zeitpunkt wird, falls überhaupt, dieser Verkeimung einzig und allein durch raschen Luftaustausch und ggf. durch die Verwendung von Luftfilteranlagen entgegnet. Der hierdurch erzielte Effekt ist jedoch nur unzureichend, insbesondere können die hierbei verwendeten Filteranlagen selbst als Quelle für die Verteilung von Mikroorganismen in der Raumluft dienen. Lösungen für dieses Problem werden momentan weltweit gesucht. Die beteiligten Fachleute sind sich jedoch übereinstimmend einig, dass ein einfaches Beaufschlagen mit einem antimikrobiellen Substrat dieses Problem nicht löst, da sich diese Substanz zum einen auf oder in den Lebensmitteln abscheiden oder einlagern würde, beziehungsweise zu Belastungen der Atmungsorgane führen würde.

Andererseits ist die antimikrobielle Aktivität von Zusammensetzungen, die mehrere GRAS (Generally Recognized As Safe) Aromastoffe enthalten, aus den Schriften WO-96/29895, DE-A-19612340, WO-98/58590, DE-A-198 31 306 und WO-00/03612 (die beiden letzteren veröffentlicht nach dem Prioritätsdatum der vorliegenden Anmeldung) bekannt. Weiterhin ist aus dem US-Patent 4,806,526 bekannt, dass wässrige ethanolische Lösungen (20 - 40 Vol.-% Ethanol), die 0,1 - 10 Gew.-% Tanninsäure und optional Benzylalkohol ( 5 - 20 Vol.-%) enthalten, mitizide und antiallergene Eigenschaften besitzen und auch in Formen von Aerosolen appliziert werden können.

Es ist jedoch notwendig, dass - insbesondere bei der Anwendung des erfindungsgemäßen Verfahrens in lebensmittelverarbeitenden Betrieben oder in bewohnten Räumen - die antimikrobielle Zusammensetzung frei von Ethanol und Isopropanol ist bzw. frei von bedenklichen Dosierungen von Ethanol und Isopropanol ist, da diese Stoffe von den Personen in den behandelten Räumen eingeatmet werden können. Darüber hinaus kann bei der Verwendung dieser Verbindungen Explosionsgefahr bestehen.

Überraschenderweise wurde nun gefunden, dass durch Verteilen/Zerstäuben einer speziellen antimikrobiellen Zusammensetzung, die zwei oder mehr GRAS-Aromastoffe enthält und frei von Ethanol und Isopropanol ist, der Keimgehalt in der Raumluft signifikant verringert werden kann. Für die Wirksamkeit des Verfahrens werden darüber hinaus nur äußerst geringe Konzentrationen der antimikrobiellen Zusammensetzung benötigt, so dass diese keine Beeinträchtigung der in dem Raum befindlichen Personen beziehungsweise der hier gelagerten Produkte hervorruft.

Gegenstand der vorliegenden Anmeldung ist demgemäss

(1) eine antimikrobielle Zusammensetzung zur Entkeimung von Luft, die frei von Ethanol und Isopropanol ist und

(a1) 0,1 bis 10 Gew.-% wenigstens eines aromatischen Aroma-Alkohols, ausgewählt aus Benzylalkohol, 2-Phenylethanol, 1-Phenylethanol, Zimtalkohol, Hydrozimtalkohol und 1-Phenyl-1-propanol,
(a2) wenigstens 75 Gew.-% eines oder mehrerer hydrophiler Aroma-Alkohole, ausgewählt aus 1-Propanol, Glycerin, Propylenglykol und Acetoin, und
(b2) wenigstens 0,01 Gew.-% wenigstens einer Aromasäure ausgewählt aus Essigsäure, Aconitsäure, Adipinsäure, Ameisensäure, Apfelsäure, Capronsäure, Hydrozimtsäure, Pelargonsäure, Milchsäure, Phenoxyessigsäure, Phenylessigsäure, Valeriansäure, iso-Valeriansäure, Zimtsäure, Citronensäure, Mandelsäure, Weinsäure, Fumarsäure, Tanninsäure und deren Derivaten;

(2) eine bevorzugte Ausführungsform der in (1) definierten Zusammensetzung, wobei der aromatische Aroma-Alkohol (a1) Benzylalkohol ist;
(3) eine antimikrobielle Zusammensetzung wie in (1) oder (2) definiert, weiterhin enthaltend

(b1) 0,01 bis 10 Gew.-% Polyphenolverbindungen, ausgewählt aus Brenzcatechin, Resorcin, Hydrochinon, Phloroglucin, Pyrogallol, Usninsäure, Acylpolyphenolen, Ligninen, Anthocyanen, Flavonen, Catechinen, Gallussäurederivaten, Kaffeesäure, Flavonoiden und Extrakten aus Camellia Primula;

(4) ein Verfahren zur Entkeimung von Luft, das das Verteilen oder Zerstäuben einer antimikrobiellen Zusammensetzung, wie in (1) bis (3) definiert, umfasst, wobei durch das Verteilen oder Zerstäuben der antimikrobiellen Zusammensetzung eine Konzentration der antimikrobiellen Zusammensetzung von 0,001 bis 1 ml pro m$^3$ Luft eingestellt wird und/oder austauschende Luftsysteme so eingestellt werden, dass bei einer stündlichen Umwälzung 0,001 bis 1 ml antimikrobieller Zusammensetzung pro m$^3$ Luft zugegeben werden; und
(5) die Verwendung der in (1) bis (3) definierten Zusammensetzung zur Entkeimung von Luft, einschließlich der Luft in allen Arten von Verpackungen.

Figuren:

Die nachfolgend erwähnten Figuren zeigen Vorrichtungen, die in den erfindungsgemäßen Entkeimungsverfahren einsetzbar sind.

Fig. 1 zeigt einen Luft-EvL(Entkeimung von Luft)-Bubbler.
Fig. 2 zeigt ein Zweistoffdüsensystem.
Fig. 3 zeigt ein Verdampfungssystem.
Fig. 4 zeigt eine Bubbler-EvL-Vorrichtung für die Entkeimung in der Verpackung.
Fig. 5 zeigt die Ergebnisse des in Beispiel 4 beschriebenen Versuchs bezüglich Luftkeimgehalt in einem Käsereifelager, welcher mit und ohne Anwendung des erfindungsgemäßen Verfahrens bestimmt wurde.
Fig. 6 zeigt eine schematische Seitenansicht der Vorrichtung zur Anreicherung von Luft.
Fig. 7 zeigt eine der in Fig. 6 dargestellten Vorrichtung entsprechende Vorrichtung mit nachgeschalteter Druckerzeugungseinrichtung.

Im folgenden werden die Bestandteile der erfindungsgemäßen Zusammensetzungen näher beschrieben:

Die genannten GRAS-Aroma-Alkohole der Komponente (a) sind von der FDA-Behörde zur Verwendung in Nahrungsmitteln als gewerbesicher anerkannt (GRAS = Generally Recognized As Safe In Food). Bei den erwähnten GRAS-Aroma-Alkoholen und auch bei den nachfolgend definierten anderen GRAS-Aromastoffen handelt es sich um solche Verbindungen, die in FEMA/FDA GRAS Flavour Substances Lists GRAS 3-15 Nr. 2001-3815 (Stand 1997) genannt sind. In dieser Liste sind natürliche und naturidentische Aromastoffe aufgeführt, die von der amerikanischen Gesundheitsbehörde FDA zur Verwendung in Nahrungsmitteln zugelassen sind: FDA Regulation 21 CFR 172.515 für naturidentische Aromastoffe (Synthetic Flavoring Substances and Adjuvants) und FDA Regulation 21 CFR 182.20 für natürliche Aromastoffe (Natural Flavoring Substances and Adjuvants).

Als Komponente (b1) können die folgenden Polyphenole eingesetzt werden:

Brenzcatechin, Resorcin, Hydrochinon, Phloroglucin, Pyrogallol, Usninsäure, Acylpolyphenole, Lignine, Anthocyane, Flavone, Catechine, Gallussäurederivate (z. B. Tannine, Gallotannin, Gerbsäuren, Gallus-Gerbsäuren), (einschließlich der Derivate der vorstehend genannten Verbindungen wie (2,5-Dihydroxyphenyl)carboxyl- und (2,5-Dihydroxyphenyl)alkylencarboxylsubstitutionen, Salze, Ester, Amide), Kaffeesäure und deren Ester und Amide, Flavonoide (z. B. Flavon, Flavonol, Isoflavon, Gossypetin, Myrecetin, Robinetin, Apigenin, Morin, Taxifolin, Eriodictyol, Naringin, Rutin, Hesperidin, Troxerutin, Chrysin, Tangeritin, Luteolin, Catechine, Quercetin, Fisetin, Kaempferol, Galangin, Rotenoide, Aurone, Flavonole, -diole), Extrakte aus z. B. Camellia Primula. Weiterhin können auch deren mögliche Derivate, z. B. Salze, Säuren, Ester, Oxide und Ether verwendet werden. Das besonders bevorzugte Polyphenol ist Tannin (eine GRAS-Verbindung).

Als Komponente (b2) können folgende hydrophile GRAS-Säuren zum Einsatz kommen: Essigsäure, Aconitsäure, Adipinsäure, Ameisensäure, Apfelsäure (1-Hydroxybernsteinsäure), Capronsäure, Hydrozimtsäure (3-Phenyl-1-propionsäure), Pelargonsäure (Nonansäure), Milchsäure (2-Hydroxypropionsäure), Phenoxyessigsäure (Glykolsäurephenylether), Phenylessigsäure ($\alpha$-Toluolsäure), Valeriansäure (Pentansäure), iso-Valeriansäure (3-Methylbutansäure), Zimtsäure (3-Phenylpropensäure), Citronensäure, Mandelsäure (Hydroxyphenylessigsäure), Weinsäure (2,3-Dihydroxybutandisäure; 2,3-Dihydroxybernsteinsäure), Fumarsäure, Tanninsäure und deren Derivate. Die bevorzugte hydrophile GRAS-Säure umfasst organische Säuren mit 2 bis 10 C-Atomen, wobei Essigsäure, Aconitsäure, Apfelsäure, Milchsäure, Phenylessigsäure, Citronensäure, Mandelsäure, Weinsäure, Fumarsäure, Hydrozimtsäure und deren physiologischen Salze besonders bevorzugt sind.

Geeignete Derivate der genannten Säuren im Sinne der vorliegenden Erfindung sind Ester (z. B. $C_{1-6}$-Alkylester und Benzylester), Amide (einschließlich N-substituierte Amide) und Salze (Alkali-, Erdalkali- und Ammoniumsalze). Ebenfalls umfasst der Begriff Derivate im Sinne der vorliegenden Erfindung Modifikationen der Seitenketten-Hydroxyfunktionen (z. B. Acyl- und Alkylderivate) und Modifikationen der Doppelbindungen (z. B. die perhydrierten und hydroxilierten Derivate der genannten Säuren).

Das Mischungsverhältnis der Komponente (a) zu Komponenten (b) liegt vorzugsweise zwischen 10.000 : 1 und 1 : 10.000, besonders bevorzugt zwischen 1000 : 1 und 1:1000 und ganz besonders bevorzugt zwischen 100 : 1 und 1 : 100.

In einer bevorzugten Ausführungsform des erfindungsgemäßen Verfahrens enthält die antimikrobielle Zusammensetzung

(b1) eine oder mehrere Polyphenolverbindungen und

(b2) eine oder mehrere GRAS-Säuren oder deren Derivate wie vorstehend definiert.

Geeignete Mengen der Komponenten (a2) und (b1) sind dabei:

wenigstens 75 Gew.-%, vorzugsweise bis 99 Gew.-% Komponente (a2); 0,01 bis 10 Gew.-% Komponente (b1).

Hierbei ist die Komponente (a2) die Hauptkomponente. Besonders bevorzugt im Sinne der vorliegenden Erfindung ist eine Zusammensetzung, die 0,1 bis 10 Gew.-% Benzylalkohol, wenigstens 75 Gew.-% Propylenglykol sowie wenigstens 0,01 Gew.-% an (b2) enthält.

Die antimikrobielle Zusammensetzung kann weiterhin noch die folgenden Komponenten (c) bis (h) enthalten, die ebenfalls Aromastoffe sind, die in der FEMA/FDA GRAS Flavour Substances Liste als G.R.A.S. (Generally Recognized As Safe In Food) 3-15 Nr. 2001-3815 (Stand 1997) anerkannt sind.

Als Komponente (c) können folgende Phenolverbindungen zum Einsatz kommen:

Thymol, Methyleugenol, Acetyleugenol, Safrol, Eugenol, Isoeugenol, Anethol, Phenol, Methylchavicol (Estragol; 3-4-Methoxyphenyl-1-propen), Carvacrol, $\alpha$-Bisabolol, Fornesol, Anisol (Methoxybenzol) und Propenylguaethol (5-Prophenyl-2-ethoxaphenol) und deren Derivate.

Als GRAS-Ester (Komponente (d)) kommen Allicin und die folgenden Acetate iso-Amylacetat (3-Methyl-1-butylacetat), Benzylacetat, Benzylphenylacetat, n-Butylacetat, Cinnamylacetat (3-Phenylpropenylacetat), Citronellylacetat, Ethylacetat (Essigester), Eugenolacetat (Acetyleugenol), Geranylacetat, Hexylacetat (Hexanylethanoat), Hydrocinnamylacetat (3-Phenyl-propylacetet), Linalylacetat, Octylacetat, Phenylethylacetat, Terpinylacetat, Triacetin (Glyceryltriacetat), Kaliumacetat, Natriumacetat, Calciumacetat zum Einsatz. Weitere geeignete Ester sind die Esterderivate der vorstehend definierten Säuren (Komponente (b2)).

Als Terpene (Komponente (e)) kommen z. B. Campher, Limonen und $\beta$-Caryophyllen in Betracht.

Zu den verwendbaren Acetalen (Komponente (f)) zählen z. B. Acetal, Acetaldehyddibutylacetal, Acetaldehyddipropylacetal, Acetaldehydphenethylpropylacetal, Zimtaldehydethylenglykolacetal, Decanaldimethylacetal, Heptanaldimethylacetal, Heptanalglycerylacetal und Benzaldehydpropylenglykolacetal.

Als Aldehyde (Komponente (g)) sind z. B. Acetylaldehyd, Anisaldehyd, Benzaldehyd, iso-Butylaldehyd (Methyl-1-propanal), Citral, Citronellal, n-Caprinaldehyd (n-Decanal), Ethylvanillin, Fufurol, Heliotropin (Piperonal), Heptylaldehyd (Heptanal), Hexylaldehyd (Hexanal), 2-Hexenal ($\beta$-Propylacrolein), Hydrozimtaldehyd (3-Phenyl-1-propanal), Laurylaldehyd (Docdecanal), Nonylaldehyd (n-Nonanal), Octylaldehyd (n-Octanal), Phenylacetaldehyd (1-Oxo-2-phenylethan), Propionaldehyd (Propanal), Vanillin, Zimtaldehyd (3-Phenylpropenal), Perillaaldehyd und Cuminaldehyd verwendbar.

Erfindungsgemäß einsetzbar sind beispielsweise auch die im folgenden aufgeführten etherischen Öle und/oder die alkoholischen, glykolischen oder durch $CO_2$-Hochdruckverfahren erhaltenen Extrakte aus den genannten Pflanzen (Komponente (h)):

(h1) Öle bzw. Extrakte mit hohem Anteil an Alkoholen: Melisse, Koriander, Kardamon, Eukalyptus;

(h2) Öle bzw. Extrakte mit hohem Anteil an Aldehyden: Eukalyptus citriodora, Zimt, Zitrone, Lemongras, Melisse, Citronella, Limette, Orange;

(h3) Öle bzw. Extrakte mit hohem Anteil an Phenolen: Oreganum, Thymian, Rosmarin, Orange, Nelke, Fenchel, Campher, Mandarine, Anis, Cascarille, Estragon und Piment;

(h4) Öle bzw. Extrakte mit hohem Anteil an Acetaten: Lavendel;

(h5) Öle bzw. Extrakte mit hohem Anteil an Estern: Senf, Zwiebel, Knoblauch;

(h6) Öle bzw. Extrakte mit hohem Anteil an Terpenen: Pfeffer, Pomeranze, Kümmel, Dill, Zitrone, Pfefferminz, Muskatnuß.

Der Anteil der Komponenten (c) - (h) in den antimikrobiellen Zusammensetzung ist vorzugsweise kleiner oder gleich 25 Gew.-% und liegt bevorzugt im Bereich von 0,001 bis 9 Gew.-%. Bevorzugt unter den weiteren GRAS-Aromastoffen sind die Phenole (c) und etherischen Öle (h).

Besonders bevorzugt im Sinne der vorliegenden Erfindung sind antimikrobielle Zusammensetzungen, deren antimikrobiell wirksamer Bestandteil ausschließlich aus GRAS-Aromastoffen besteht, d. h. keine "Derivate" der GRAS-Aromastoffe enthält.

Neben den Komponenten (a) bis (h) können zusätzlich noch weitere Verbindungen (i) wie Alkohole (i1) Emulgatoren (i2), Stabilisatoren (i3), Antioxidantien (i4), Konservierungsmittel (i5), Lösemittel (i6), Trägerstoffe (i7), Wasser (i8) etc. eingesetzt werden. Der Anteil der Komponenten (i) an der antimikrobiellen Zusammensetzung darf bis 95 Gew.-% sein, ist vorzugsweise kleiner als 10 Gew.-% und liegt besonders bevorzugt im Bereich von 0,1 bis 5 Gew.-%.

Bei den Alkoholen (i1) handelt es sich erfindungsgemäß um einwertige oder mehrwertige Alkohole mit 2 bis 10 C-Atomen, vorzugsweise mit 2 bis 7 C-Atomen, wobei die GRAS-Alkohole (a) hiervon nicht umfasst sind. Vorzugsweise werden solche Mengen an GRAS-Aroma-Alkoholen (a) und weiteren Alkoholen (i1) eingesetzt, dass deren Mischungsverhältnis zwischen 1000 : 1 und 1 : 1000, insbesondere zwischen 100 : 1 und 1 : 100 und besonders bevorzugt zwischen 10 : 1 und 1 : 10 liegt.

Besonders bevorzugt in dem erfindungsgemäßen Verfahren ist die Verwendung von Systemen, die ausschließlich aus GRAS-Aromastoffen bestehen, insbesondere dann wenn die behandelte Luft in lebensmittelverarbeitenden Betrieben mit Nahrungsmitteln, Getränken oder Verpackungen in Verbindung kommt, da hierdurch auch die Gefahr der Kontamination der verarbeiteten Lebensmittel durch Nicht-GRAS-Verbindungen unterbunden wird.

Das Verteilen/Zerstäuben der antimikrobiellen Zusammensetzung erfolgt durch handelsübliche Zweistoffdüsen oder Verdampfungstechniken. Als besonders vorteilhaft hat sich dabei ein in der PCT/EP00/02992 beschriebenes Verfahren erwiesen, bei welchem die antimikrobielle Zusammensetzung, nachfolgend auch Luftbehandlungsmittel bezeichnet, in einer flüssigen Phase in die Luft eingebracht wird und verdampft, wobei der Behandlungsmittelanteil in der Luft pro $m^3$ Luft zwischen 0,1 und 0,00001 ml, vorzugsweise zwischen 0,01 und 0,0001 ml, beträgt.

Dieses Verfahren weist vorzugsweise die folgenden Schritte auf:

- Zuführen des Luftbehandlungsmittels aus einer Vorratskammer in eine von Luft durchströmte Verwirbelungskammer,

- Einstellen der zugeführten Luftmenge und der zugeführten Menge an Luftbehandlungsmittel zur Erzielung des Behandlungsmittelanteils zwischen 0,1 und 0,00001 ml, vorzugsweise zwischen 0,01 und 0,0001 ml pro $m^3$ Luft pro Stunde, und

- Einleiten des Gemisches aus Luft und dampfförmigem Luftbehandlungsmittel in einen zu behandelnden Raum.

Bei derartig geringen Mengen an Luftbehandlungsmittel pro $m^3$ Luft ist ein Niederschlag des Luftbehandlungsmittels nicht mehr nachweisbar. Das Verfahren kann daher auch zur Luftbehandlung in Lagerräumen für Lebensmittel eingesetzt werden. Auch in Wartezimmern oder Wohnungen von Allergikern u.dgl. ist der Einsatz des Verfahrens besonders vorteilhaft, da kein störender Niederschlag an kühlen Fenstern oder dergleichen auftritt.

Bereits bei einem Luftbehandlungsmittelanteil von 1 ppt (parts per trillion, auf Volumenbasis) wurde eine signifikante antimikrobielle Aktivität festgestellt. So konnte bei 15 ppt (Vol.) eine durchschnittliche Keimreduzierung von 70 % im Versuch nachgewiesen werden.

Der Luftbehandlungsmittelanteil in der Raumluft , der durch das erfindungsgemäße Verfahren (1) eingestellt wird, ist üblicherweise < 10 ppb (part per billion, auf Volumenbasis), vorzugsweise = 100 ppt (Vol.) und insbesondere = 10 ppt (Vol.). Bereits bei derartig geringen Mengen an Luftbehandlungsmittel kann eine Keimreduzierung erreicht werden, die Reinraumbedingungen entspricht. Eine Voraussetzung hierfür ist jedoch, dass der Wassergehalt der antimikrobiellen Zusammensetzung (insbesondere bei solchen Zusammensetzungen, die hauptsächlich aus hydrophilen GRAS-Aromastoffen, z. B. Propylenglykol bestehen) weniger als 35 Gew.-%, vorzugsweise 5 bis 25 Gew.-% ist.

Vorzugsweise wird bei dem Verfahren zum Einbringen des Luftbehandlungsmittels in die Luft zuerst das Luftbehandlungsmittel aus einer Vorratskammer einer von Luft durchströmten Verwirbelungskammer zugeführt. Hierbei wird die der Verwirbelungskammer zugeführte Luftmenge und die der Verwirbelungskammer zugeführte Menge an Luftbehandlungsmittel so eingestellt, dass der Luftbehandlungsmittelanteil zwischen 0,1 und 0,00001 ml, vorzugsweise zwischen 0,01 und 0,0001 ml pro $m^3$ Luft pro Stunde, beträgt. Hierdurch wird bei einem kontinuierlichen Verfahren (wie bei einer Klimaanlage) eine Dauerkonzentration von 5 bis 10 ppb Luftbehandlungsmittel in der Raumluft erzeugt. Anschließend wird das Gemisch aus Luft und dampfförmigem Luftbehandlungsmittel in den zu behandelnden Raum eingeleitet.

Die Verdampfung des Luftbehandlungsmittels findet hierbei ohne Zufuhr von Wärme statt. Ausschließlich aufgrund der Verwirbelung des Luftbehandlungsmittels wird die Aufnahme der geringen Menge an Luftbehandlungsmittel durch die Luft erreicht. Die von dem Luftstrom mitgerissene Menge an Luftbehandlungsmittel ist so gering, dass kein Aerosol entsteht. Durch die Verwirbelung des Luftbehandlungsmittels in der Verwirbelungskammer wird eine Vielzahl von Luftblasen erzeugt. Hierdurch wird die Oberfläche des Luftbehandlungsmittels derart vergrößert, dass von dem Luftstrom geringe Mengen an Luftbehandlungsmittel aufgenommen werden.

Die Menge an Luft, die der Verwirbelungskammer zugeführt wird, sowie die Menge an Luftbehandlungsmittel, die der Verwirbelungskammer zugeführt wird, kann empirisch ermittelt werden. Hierbei ist darauf zu achten, dass die Geschwindigkeit des Luftstroms nicht so hoch ist, dass Tröpfchen von Luftbehandlungsmittel mitgerissen werden. Andererseits führt eine zu geringe Menge an in der Verwirbelungskammer enthaltenem Luftbehandlungsmittel dazu, dass keine ausreichende Verwirbelung stattfindet. Es wurde herausgefunden, dass besonders gute Ergebnisse bei einem Verhältnis der zugeführten Luftmenge zu der zugeführten Menge an Luftbehandlungsmittel zwischen $\frac{45\%}{55\%}$ und $\frac{30\%}{70\%}$ erzielt werden können. Vorzugsweise liegt dieses Verhältnis zwischen $\frac{42\%}{38\%}$ und $\frac{35\%}{65\%}$ .

Vorzugsweise wird das Gemisch aus Luft und Luftbehandlungsmittel vor dem Einleiten in den zu behandelnden Raum durch eine Zwischenkammer geleitet, der durch eine Rückhaltescheibe von der Verwirbelungskammer getrennt ist. Die Zwischenkammer dient dazu, dass zu viel in der Luft enthaltenes Luftbehandlungsmittel auskondensieren kann. Dies wird durch die Rückhaltescheibe, die vorzugsweise feine Öffnung hat oder als feinporige Membran ausgebildet ist, noch unterstützt. Die Zwischenkammer dient somit als Tropfenabscheider. Hierdurch ist sichergestellt, dass kein Aerosol in den zu behandelnden Raum gelangt. Bei dem in den zu behandelnden Raum strömenden Gemisch aus Luft und dampfförmigem Lufthandlungsmittel kann ein Niederschlag mit herkömmlichen Methoden nicht nachgewiesen werden.

Da die in die Verwirbelungskammer eingeleitete Menge an Luftbehandlungsmittel erheblich größer ist als die in dem Gemisch aus Luft und Luftbehandlungsmittel enthaltene Behandlungsmittelanteil wird überschüssiges Luftbehandlungsmittel aus der Verwirbelungskammer abgeführt. Vorzugsweise wird das Luftbehandlungsmittel in die Vorratskammer zurückgeführt. Aus dieser kann es unmittelbar wieder in die Verwirbelungskammer eingeleitet werden.

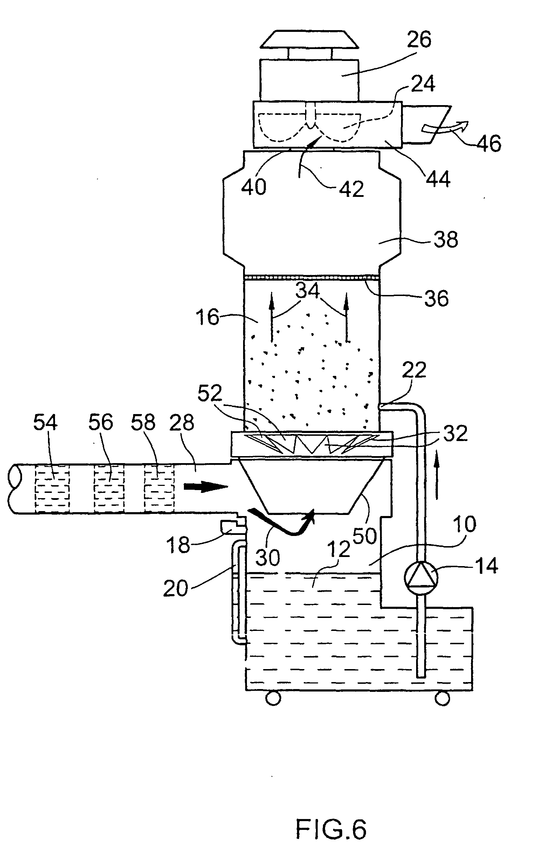

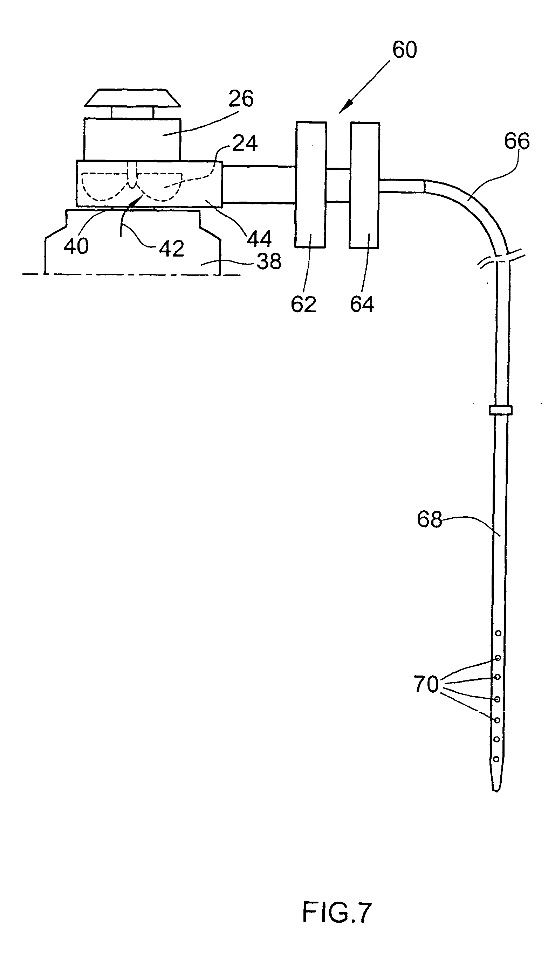

Hierfür vorgesehene Vorrichtungen, wie eine Bubbler-Einrichtung, die die Luft mit Entkeimungsmittel in feinster Verteilung und niedrigst möglicher Dosierung beaufschlagt und eine speziell für die Verpackung anzuwendende Vorrichtung, sind in den beiliegenden Figuren abgebildet. Besonders bevorzugt ist dabei eine in der PCT/EP00/02992 beschriebene und in der vorliegenden Anmeldung in Fig. 6 und 7 gezeigten Vorrichtung, die insbesondere zur Luftentkeimung geeignet ist und die eine Vorratskammer, eine Verwirbelungskammer und ein Mittel zur Erzeugung eines Luftstroms aufweist. In der Vorratskammer ist flüssiges Luftbehandlungsmittel enthalten. Das flüssige Luftbehandlungsmittel wird beispielsweise mittels einer Pumpe der Verwirbelungskammer zugeführt. Bei dem Mittel zur Erzeugung eines Luftstroms kann es sich je nach Aufbau der Vorrichtung um einen das Gemisch aus der Verwirbelungskammer saugenden Ventilator oder einen Luft in die Verwirbelungskammer blasenden Ventilator handeln. Der Ventilator ist so angeordnet, dass in der Verwirbelungskammer ein Luftstrom entsteht, durch den eine Verwirbelung des flüssige Behandlungsmittels erfolgt. Durch die Verwirbelung des Luftbehandlungsmittels nimmt die Luft eine geringe Menge an Luftbehandlungsmittel auf, so dass aus der Verwirbelungskammer ein Gemisch aus Luft und dampfförmigem Luftbehandlungsmittel austritt.

Die Vorrichtung ist zur Durchführung des erfindungsgemäßen Verfahrens geeignet, so dass das aus der Vorrichtung austretende Gemisch aus Luft und dampfförmigem Luftbehandlungsmittel einen Luftbehandlungsmittelanteil pro m³ Luft pro Stunde zwischen 0,1 und 0,00001 ml, vorzugsweise zwischen 0,01 und 0,0001 ml, aufweist. Je nach Art des Behandlungsmittels kann der Behandlungsmittelanteil in der Luft durch das Verhältnis von zugeführter Luftmenge und zugeführter Menge an Behandlungsmittel zu der Verwirbelungskammer eingestellt werden. Es wurde herausgefunden, dass bei einem Verhältnis von Luftmenge zu Behandlungsmittelmenge zwischen $\frac{45\%}{55\%}$ und $\frac{30\%}{70\%}$ , vorzugsweise zwischen $\frac{42\%}{58\%}$ und $\frac{35\%}{65\%}$ , ein derart geringer Behandlungsmittelanteil erzielt werden kann.

Vorzugsweise weist die Verwirbelungskammer im Bodenbereich Lufteintrittsöffnungen auf, durch die Luft in die Verwirbelungskammer einströmt. Ferner kann überschüssiges Luftbehandlungsmittel aus der Verwirbelungskammer durch die Lufteintrittsöffnungen in dem Luftstrom entgegengesetzter Richtung ablaufen.

In Versuchen mit einem Luftentkeimungsmittel wurde bei einem Luftdurchsatz von ca. 1100 m³ pro Stunde ein Behandlungsmittelanteil von 0,01 ml pro m³ Luft erzielt. Bei den vorstehend angegebenen Verhältnissen zwischen Luft und Behandlungsmittel wird somit nur ein sehr geringer Anteil an Luftbehandlungsmittel in der Luft aufgenommen und ein Großteil des Luftbehandlungsmittels wird aus der Verwirbelungskammer abgeführt. Hierbei handelt es sich um einen überraschenden Effekt, da trotz der sehr großen Menge an Luftbehandlungsmittel in der Verwirbelungskammer durch die Verwirbelung ein sehr geringer Anteil Luftbehandlungsmittel von der Luft aufgenommen wird. Derart geringe Mengen an Luftbehandlungsmittel in die Luft einzubringen, ist mit Sprühtechniken oder mit Wärmeverdampfung nicht möglich. Dies ist insbesondere nicht möglich, wenn bekannte Vorrichtung ohne Taktung betrieben werden. Bei der erfindungsgemäßen Vorrichtung wurde das vorstehende Ergebnis jedoch ohne Taktung erreicht.

Um sicherzustellen, dass tatsächlich kein sich niederschlagendes Aerosol aus der Vorrichtung entweicht, ist der Verwirbelungskammer eine Zwischenkammer nachgeschaltet. Zwischen der Zwischenkammer und der Verwirbelungskammer ist eine Rückhaltescheibe vorgesehen. Gegebenenfalls von dem Luftstrom mitgerissene Tröpfchen an Luftbehandlungsmittel werden einerseits von der Rückhaltescheibe zurückgehalten und kondensieren andererseits in der Zwischenkammer aus.

Vorzugsweise sind den Lufteintrittsöffnungen der Verwirbelungskammer Filter vorgeschaltet, um eine möglichst keimfrei, partikelfreie und bakterienfreie Luft der Vorrichtung zuzuführen. Hierzu ist ein Partikelfilter und/oder ein Bakterienfilter und/oder ein Feuchtigkeitsfilter vorgesehen.

Vorteilhafterweise wird die Vorrichtung mit einer Klimaanlage gekoppelt, so dass durch die Klimaanlage das Verteilen des Luftbehandlungsmittels Im gesamten Raum gewährleistet ist.

Bei einer weiteren Ausführungsform ist der Vorrichtung eine Druckerzeugungseinrichtung nachgeschaltet, die den Druck des austretenden Gemisches aus Luft und dampfförmigem Luftbehandlungsmittel erhöht. Eine derartige Vorrichtung kann beispielsweise verwendet werden, um sicherzustellen, dass das Gemisch auch in die Ecken eines Raumes geblasen wird.

An eine Vorrichtung mit angeschlossener Druckerzeugungseinrichtung kann eine Lanze mit Luftaustrittsöffnungen angeschlossen werden. Die Lanze kann in Lebensmittelverpackungen eingeführt werden, um das Luftbehandlungsmittel in die Verpackung einzuleiten.

Mit der hier beschriebenen Vorrichtung können insbesondere die vorstehend definierten antimikrobiellen Zusammensetzungen in die Luft ausgebracht werden. Nachfolgend werden die Figuren 6 und 7 ausführlich beschrieben.

In einer Vorratskammer 10 ist Luftbehandlungsmittel 12 enthalten. Das Luftbehandlungsmittel 12 wird mittels einer Pumpe 14 aus der Vorratskammer 10 in eine Verwirbelungskammer 16 gepumpt. Die Vorratskammer 10 ist ferner mit einem Einfüllstutzen 18 zum Nachfüllen von Luftbehandlungsmittel 12 und mit einer Füllstandsanzeige 20 in Form eines durchsichtigen Rohrs versehen.

Das aus der Vorratskammer 10 in die Verwirbelungskammer 16 gepumpte Luftbehandlungsmittel 12 wird über eine Zuführöffnung 22 der Verwirbelungskammer 16 zugeführt. In Abhängigkeit des Pumpendrucks und der Größe der Zuführöffnung 22 wird das Luftbehandlungsmittel 12 mit unterschiedlichem Druck in die Verwirbelungskammer 16 eingespritzt. Durch das Einspritzen des Luftbehandlungsmittels 12 kann der Verwirbelungseffekt in der Verwirbelungskammer 16 erhöht werden.

Mittels eines als Mittel zur Erzeugung eines Luftstroms dienenden Ventilators 24, der von einem Motor 26 angetrieben ist, wird Luft durch einen Luftzuführkanal 28 in den oberen Bereich der Vorratskammer 10 gesaugt. Aus diesem tritt die Luft in Richtung des Pfeils 30 durch im Bodenbereich der Verwirbelungskammer 16 angeordnete Lufteintrittsöffnungen 32 in die Verwirbelungskammer 16 ein. Aus dieser tritt der Luftstrom in Richtung der Pfeile 34 durch eine Rückhaltescheibe 36 hindurch in eine Zwischenkammer 38 ein. Aus der Zwischenkammer 38 tritt das Gemisch aus Luft und Luftbehandlungsmittel durch einen rohrförmigen Ansatzstutzen 40 in Richtung des Pfeils 42 in einen Ventilatorraum 44 und aus diesem in Richtung eines Pfeils 46 in den zu behandelnden Raum ein.

Die im Bodenbereich der Verwirbelungskammer 16 vorgesehenen Lufteintrittsöffnungen 32 sind sternförmig angeordnete Schlitze, durch die die Luft in die Verwirbelungskammer 16 eintritt. Da die der Verwirbelungskammer 16 zugeführte Menge an Luftbehandlungsmittel 12 größer ist als der Luftbehandlungsmittelanteil in dem aus der Vorrichtung austretenden Gemisch, muss ein Großteil des Luftbehandlungsmittels 12 aus der Verwirbelungskammer 16 wieder in die Vorratskammer 10 zurückgeführt werden. Bei der dargestellten Ausführungsform fließt das überschüssige Luftbehandlungsmittel 12 durch die schlitzförmigen Lufteintrittsöffnungen 32 in die Vorratskammer 10 zurück. Hierzu ist der Bodenbereich der Verwirbelungskammer 16, in der die Lufteintrittsöffnungen 32 vorgesehen sind, trichterförmig ausgebildet. Um ein gezieltes Zurückfließen des überflüssigen Luftbehandlungsmittels zu gewährleisten, ist im oberen Bereich der Vorratskammer 10 ein Trichter 50 vorgesehen. Durch den Trichter 50 ist ferner verhindert, dass Luftbehandlungsmittel 12 in den Luftzuführkanal 28 gelangt.

Die Schlitzbreite der Lufteintrittsöffnungen 32 ist einstellbar, da der Bodenbereich aus einzelnen dreieckförmigen Segmenten 52 besteht, deren Neigungswinkel verstellbar ist. Je steiler die Segmente 52 angeordnet sind, desto größer sind die schlitzförmigen Lufteintrittsöffnungen 32.

Das aus der Verwirbelungskammer 16 austretende Gemisch aus Luft und Luftbehandlungsmittel wird durch die Rückhaltescheibe 36 hindurch in die Zwischenkammer 38 geführt. Die Rückhaltescheibe 36 weist Öffnungen mit geringem Durchmesser auf oder besteht aus einer feinporigen Membran. Durch die Rückhaltescheibe 36 werden ggf. von dem Luftstrom mitgerissene Luftbehandlungsmittel-Tröpfchen zurückgehalten, so dass möglichst nur dampfförmiges Luftbehandlungsmittel in die Zwischenkammer 38 gelangt.

Die Zwischenkammer 38 ist als zusätzliche Sicherheit vorgesehen. Hierbei ist sichergestellt, dass ggf. in dem Gemisch aus Luft und Luftbehandlungsmittel befindliches Luftbehandlungsmittel, das nicht in dampfförmiger Form vorliegt, in der Zwischenkammer 38 auskondensiert. Der an den Wänden der Zwischenkammer 38 auskondensierende Teil des Luftbehandlungsmittels fließt durch die Rückhaltescheibe 36 zurück in die Verwirbelungskammer 16. Aus der Zwischenkammer 38 tritt entlang des Pfeils 42 ausschließlich ein Gemisch aus Luft und dampfförmigem Luftbehandlungsmittel in die Ventilatorkammer 44 ein. Das in den Ventilatorraum 44 eintretende Gemisch weist kein Aerosol mehr auf, so dass die geringe Menge an Luftbehandlungsmittel, die sich in dem Gemisch befindet, nicht mehr als Niederschlag nachweisbar ist.

In dem Luftzuführkanal 28 ist zum Filtern der angesaugten Luft ein Partikelfilter 54, insbesondere ein Pollenfilter, ein Bakterienfilter 56 und ein Feuchtigkeitsfilter 58 vorgesehen. Durch den Feuchtigkeitsfilter 58 wird die Feuchtigkeit aus der angesaugten Luft entnommen, da die verwendeten Luftbehandlungsmittel häufig hydroskopisch sind.

An die Ventilatorkammer 44 kann eine Druckerzeugungseinrichtung 60 (Fig. 7) angeschlossen sein. Im dargestellten Ausführungsbeispiel handelt es sich um eine zweistufige Druckerzeugungseinrichtung mit einer ersten Druckerzeugungsstufe 62 und einer zweiten Druckerzeugungsstufe 64. Nach der Druckerzeugungseinrichtung 60 wird das Gemisch aus Luft und Luftbehandlungsmittel in einen flexiblen Schlauch 66 mit erhöhtem Druck eingeleitet. An den flexiblen Schlauch 66 ist eine Lanze 68 mit Austrittsöffnungen 70 angeschlossen. Die Lanze 68 kann in Lebensmittelverpackungen eingeführt werden, um diese mit dem Gemisch aus Luft und Luftbehandlungsmittel zu füllen.

Wenn mit der erfindungsgemäßen Vorrichtung ein Luftentkeimungsmittel ausgebracht wird, kann dieses anstelle von Stickstoff in Verpackungen von Brötchen u.dgl. eingeleitet werden. Das Luftentkeimungsmittel bewirkt ein Abtöten der auf den Brötchen befindlichen Schimmelkeime. Dadurch ist auch bei in den Schweißnähten der Verpackung häufig vorkommenden kleinen Öffnungen gewährleistet, dass die Brötchen nicht zu schimmeln beginnen. Dies ist beim Verwenden von Stickstoff o.ä. nicht der Fall, da Stickstoff nur die Schimmelbildung unterdrückt. Dies bedeutet, dass die Brötchen zu schimmeln beginnen, sobald Frischluft in die Verpackung gelangt. Bei der Verwendung von Luftentkeimungsmittel müssen zusätzlich zur Frischluft auch Schimmelkeime in die Verpackung eindringen. Dies ist durch die sehr kleinen Öffnungen in den Schweißnähten im allgemeinen nicht möglich. Durch das Verwenden von Luftentkeimungsmitteln in Verpackungen ist die Gefahr des Schimmelns des enthaltenen Lebensmittels erheblich verringert.

Das Zerstäuben/Verteilen erfolgt dabei so, dass die Konzentration der antimikrobiellen Zusammensetzung 0,001 bis 1 ml pro $m^3$ Luft, insbesondere 0,01 bis 0,1 ml pro $m^3$ Luft, beträgt. Bei austauschenden Luftsystemen, bei denen eine stündliche Umwälzung erfolgt, ist das Verfahren so einzustellen, dass eine Dosierung von 0,001 bis 1 ml pro $m^3$ pro Stunde, insbesondere von 0,02 bis 0,1 ml pro $m^3$ pro Stunde, gegeben ist.

In experimentellen Beispielen konnte gezeigt werden, dass durch die Verteilung bzw. das Zerstäuben der erfindungsgemäßen antimikrobiellen Zusammensetzung ein Reduktionsfaktor $R_f$ von log 5 bis 3 erzielbar ist, d. h. eine Reduktion der Keime pro $m^3$ Luft von 10.000 auf 0 möglich ist.

Das vorliegende Verfahren eignet sich dadurch sowohl zur Entkeimung der Luft in privaten Haushalten, Büros und öffentlichen Gebäuden als auch in lebensmittelverarbeitenden Betrieben, Transportvorrichtungen, Kühl-, Klima- und sonstigen Lüftungsbereichen. In den letzteren wird durch die Entkeimung der Umgebungsluft (z. B. bei der Verpackung der Lebensmittel) eine deutlich höhere Stabilität der Lebensmittel erzielt.

Die vorliegende Erfindung wird anhand der nachfolgenden Beispiele näher erläutert.

**Beispiele**

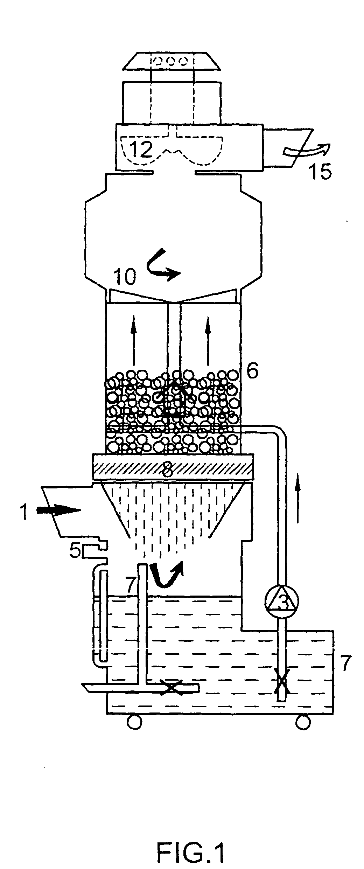

Verwendete Apparaturen: Für die nachfolgend beschriebenen Beispiele wurden die in den Figuren 1 bis 4, 6 und 7 abgebildeten Vorrichtungen verwendet.

Fig. 1: Luft-EvL(Entkeimung von Luft)-Bubbler

Autonome, fest installierte oder mobile Bubblereinheit mit eingebautem Abluftventilator und Pumpe. Luftmenge 2 - 1600 $m^3$/h (oder größer)

Funktionsprinzip: Bubbler mit schwebendem EvL-Fließbett

Luft mit gegenströmendem EvL-Mittel. Hier wird EvL-Mittel in einer Kammer mit starkem Unterdruck zum Schweben gebracht. Dadurch entsteht ein Gleichgewicht zwischen Luftunterdruck und EvL-Mittelgewicht. Die Luft verteilt sich auf die gesamte EvL-Fläche und steigt als mikroskopisch kleine Blasen durch das EvL-Bett. Die Luftblasen bilden eine sehr große Kontaktfläche zwischen Gas und Flüssigkeit. Luftdruck und Verweilzeit stehen in einem ausgewogenen Verhältnis. EvL-Mittel wird mit der Luft entsprechend dosiert mittransportiert.

Ventilator: Der Abluft-Radialventilator befindet sich immer im Reinluftbereich und kann auch extern installiert sein.

Bubbler: Der Wäscher besteht aus:

- Absorptionsflüssigkeits-Behälter
- Waschkammer
- Trockenkammer
- Ventilator

Legende zur Fig. 1:

1) Luftansaugstutzen mit/ohne Mikrofilter
2) EvL-Mittelzufuhr
3) z. B. Pumpe 15 $m^3$/h
Motor 220/380 V; 2800 U/min; 1,1 kW
5) Dosiereinheit (elektr.) Menge/Luft Verhältnis EvL-Mitteldosierung 0,02 ml - 0,1 ml/$m^3$ (h) Dosierung

6) EvL-Mittel

7) EvL-Mittel

9) Waschkammer

10) Trockner

12) Ventilator 1200/1800 m$^3$/h

Motor 220/380 V; 2800 U/min; 1,1 kW

15) Ausblasstutzen z.B. Ø 200 mm

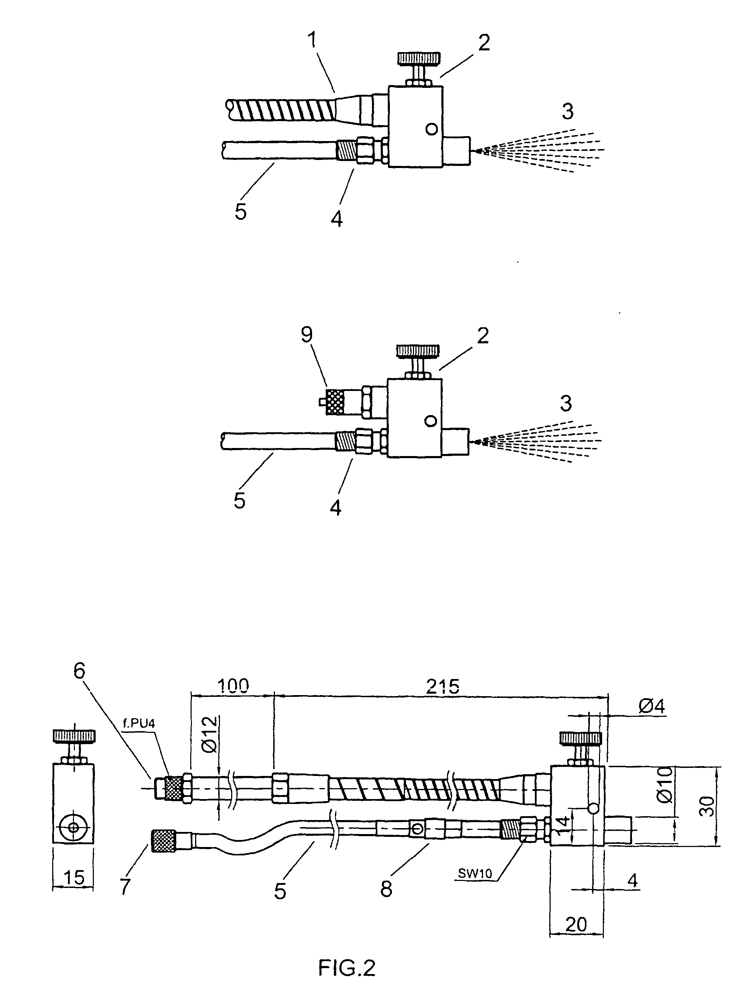

<u>Fig. 2</u>: EvL-Zerstäuber-Niederdruck-System (für dünne Flüssigkeiten)

Zum Zerstäuben dünner Öle und Flüssigkeiten mit gezieltem Wirkungsbereich.

Bereits ab 2 bar Überdruck spricht der Zerstäuber an.

Der Zerstäuber lässt sich durch den biegsamen Metallschlauch ganz nach Wunsch drehen und wenden und kann mit dem Magnethalter an jeder beliebigen Stelle befestigt werden.

Funktion: Bei anstehender Druckluft wird sofort zerstäubt (ein eingebautes Rückschlagventil lässt die Flüssigkeit im Schlauch nicht absinken. Der Zerstäuber arbeitet dauernd oder mit dem Blasautomat taktweise - aber immer in wohldosierten Mengen. Im Zentrum des Luftstrahls wird die Flüssigkeit wirtschaftlich und sauber zugeführt. Über die Luft- und Flüssigkeitsdrossel kann die Luft- und Flüssigkeitsmenge fein eingestellt werden. Der Zerstäuber ist von 10° bis 30° Sprühwinkel stufenlos einstellbar.

Legende zur Fig. 2:

1) Metallschlauch vernickelt

2) Luftdrossel

3) Sprühwinkel 10° - 30°

4) Flüssigkeitsdrossel

5) PVC-Schlauch 1 m

6) Anschluss für PK4

7) Slebventil

8) Rückschlagventil

9) Anschluss für Druckluft

10) Drosselkugel (nicht sichtbar)

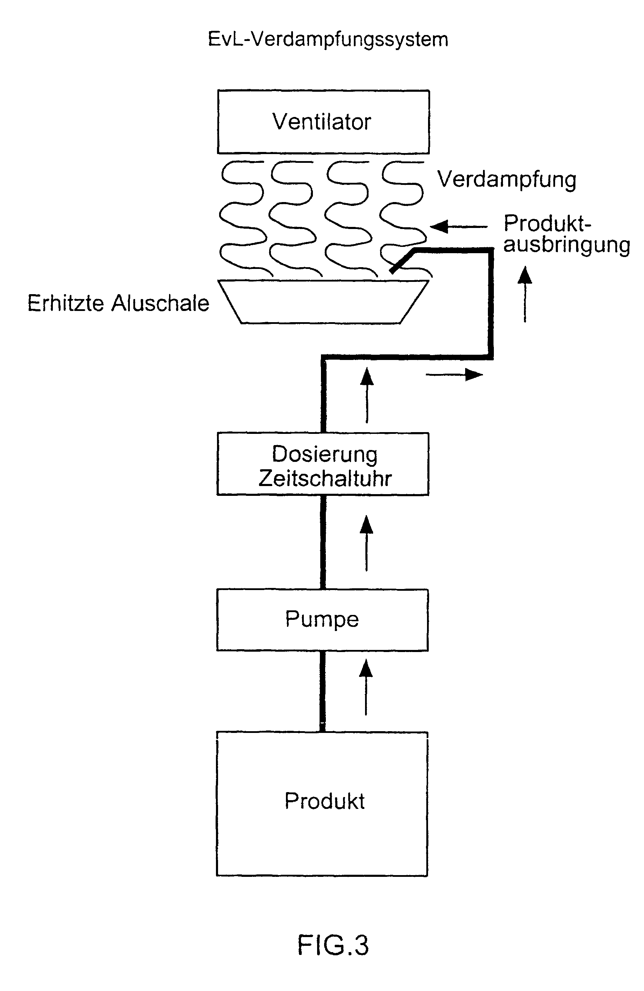

<u>Fig. 3</u>: EvL-Verdampfungssystem

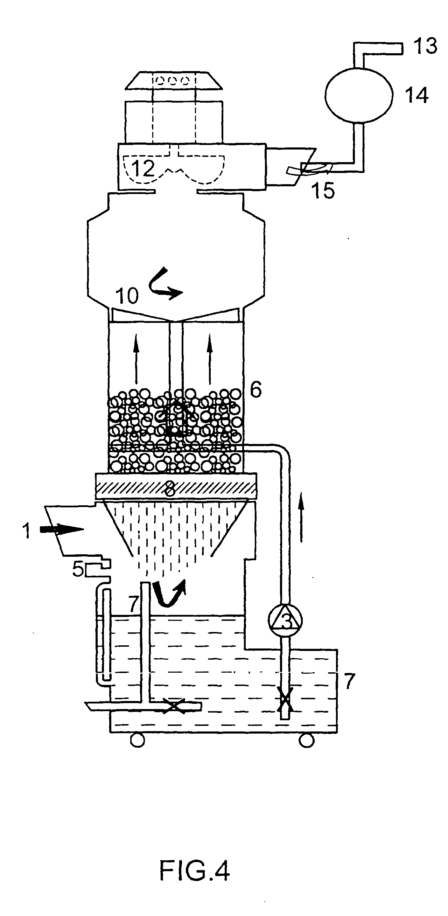

<u>Fig. 4</u>: EvL-Entkeimung in der Verpackung mit Bubbler

Ventilator: Der Abluft-Radialventilator befindet sich immer im Reinluftbereich und kann auch extern installiert sein.

Legende zur Fig. 4:

1) Luft und/oder $CO_2$/oder Stickstoff o. ä.

Ansaugstutzen mit/ohne Mikrofilter

2) EvL-Mittelzufuhr

3) Pumpe 15 m$^3$/h

Motor 220/380 V; 2800 U/min; 1,1 kW

5) Dosiereinheit (elektr.) Menge/Luft Verhältnis EvL-Mitteldosierung 0,02 ml - 0,1 ml/m$^3$ (h) Dosierung

6) EvL-Mittel

7) EvL-Mittel

9) Waschkammer

10) Trockner

12) Ventilator 1200/1800 m$^3$/h

Motor 220/380 V; 2800 U/min; 1,1 kW

13) Ausbringung in die Verpackung (z. B. über Lanze)

14) Druckreservoir (ca. 2 - 8 bar komprimiert) bestehend aus Luft und $Co_2$ und $N_2$ und EvL-Mittel mit geringer Feuchtigkeit

15) Ausblasstutzen z.B. Ø 200 mm

Entkeimungsmittel: In den nachfolgenden Beispielen wird eine nicht erfindungsgemäße Entkeimungsmittelzusammensetzung, bestehend aus 5,5 Gew.-% Polyphenol (z.B. Tannin), 10,3 Gew.-% Benzylalkohol, 4,2 Gew.-% etherisches Öl (phenolisch) und 80,0 Gew.-% Propylenglykol, verwendet (nachfolgend auch als "EvL-Mittel" oder "EvLM" bezeichnet),

Beispiel 1: Untersuchung der Entkeimung von Luft mittels der in Figur 1 dargestellten Vorrichtung

| | |
|---|---|
| Projekt: | Wirksamkeitsprüfung von EvL in Kombination mit Dosierung durch Bubbler (Prototyp)-System (Fig. 1) |
| Probenart: | Gelatinefilter aus Luftkeimsammler Satorius MD-8 |
| Untersuchungsmethode: | BLA 9420/TRBA 430, indirekte Methode |

Probenparameter

| | |
|---|---|
| Meßdauer: | 5 min |
| Volumenstrom: | 8 m$^3$/h |
| Probenahmevolumen: | 666,671 |
| Dosierung: | 0,02 ml/m$^3$ EvL-Mittel |
| Gesamtkeimzahl (KBE): | Gemisch aus Schimmel und Hefen (*Penicillium commune, Cladosporium, Aspergillus niger, Saccharomyces, cerevisiae*) |

Die Ergebnisse sind in Tabelle 1 zusammengefasst.

Tabelle 1

| Original-Nr. | Entnahmestelle (Tag) | Keimzahl |
|---|---|---|
| 99669-12 | Prüfkammer, Nullwert, 0 | 10.400 KBE/m$^3$ |
| 99669-13 | Prüfkammer, Nullwert, 0 | 11.150 KBE/m$^3$ |
| 99669-14 | Prüfkammer, 10:45, 1 | 50 KBE/m$^3$ |
| 99669-15 | Prüfkammer, 10:55, 1 | 0 KBE/m$^3$ |
| 99669-16 | Prüfkammer, 18:35, 1 | 0 KBE/m$^3$ |
| 99669-17 | Prüfkammer, 18:40, 1 | 50 KBE/m$^3$ |
| 99669-18 | Prüfkammer, 10:15, 2 | 0 KBE/m$^3$ |
| 99669-19 | Prüfkammer, 10:25, 2 | 0 KBE/m$^3$ |
| 99669-20 | Prüfkammer, 19:10, 2 | 0 KBE/m$^3$ |
| 99669-21 | Prüfkammer, 8:50, 5 | 0 KBE/m$^3$ |
| 99669-22 | Prüfkammer, 9:00, 5 | 0 KBE/m$^3$ |
| 99669-23 | Prüfkammer, 10:15, 6 | 0 KBE/m$^3$ |
| 99669-24 | Prüfkammer, 10:20, 6 | 0 KBE/m$^3$ |
| 99669-25 | Prüfkammer, 18:40, 6 | 0 KBE/m$^3$ |
| 99669-26 | Prüfkammer, 18:50, 6 | 0 KBE/m$^3$ |
| Handling-BL | 18:40, 6 | 0 KBE/m$^3$ |

Durch das Eingeben von Keimen (Schimmelpilze) Gesamtkeimzahl entspricht 10.000 Keime (KBE)/m$^3$ Luft und dessen bakteriologischer Nullwert

Kontrolle konnte nach Eingeben (Feinverteilung der EvL-Mittel durch Bubbler-System (s. technische Funktion) des EvL-Mittels nach dem 1. bis 6. Tag mehrheitlich keine Verkeimung in der Luft mehr festgestellt werden.

Beispiel 2: Verifizierung von Anwendungen zur Entkeimung von Luft mittels der in Fig. 2 dargestellten Vorrichtung

Anwendung:      Vernebeln in der Raumluft zur Reduzierung der Keimzahl
Problematik:      Allgemein hohe Keimzahl darunter auch pathogene Bakterien
                        (grampositiv und gramnegativ), *Bacillus spec.*

Dosierung:     0,02 - 0,10 ml EvL-Mittel pro $cm^3$ Luft/h

Durchführung

Simulation folgenden Raumklimas:

| Temperatur | ca. 25 °C |
|---|---|
| Rel. Luftfeuchtigkeit | ca. 55 % |

Diskontinuierliche Luftumwälzung mit entspr. Gerät (Zerstäuber-Niederdruck (ZN) 2-Stoffdüsen-System); gezielte Kontamination mit *Bacillus subtilis, Pseudomonas fluorescens* und *Staphylococcus aureus* ($10^2$ bis $10^3$) und diskontinuierliches Besprühen des Raums mit EvL-Gerät mittels ZN-Kopf-Düsen-Sprühtechnik (alle 200 s wird 5 s gesprüht)
Ziel/Ergebnis: Reduzierung des Keimgehalts der Raumluft (Bakteriologie: Gesamtkoloniezahl, *Pseudomonas fluorescens* als Leitkeim für *Legionella spp., Staphylococcus aureus, Bacillus subtilis*)
Probenahme (RCS-Luftkeimmessungen und Sedimentationsplatten) Vor Beimpfung, nach Beimpfung unmittelbar vor der Anwendung Täglich, bis keine Reduzierung mehr feststellbar ist (1 - 2 mal täglich an 2 Stellen Sedimentationsplatten, 1 x RCS).

Auswertung

Prüfbereich:      Raum ohne Klimaanlage von 32,8 $m^3$
Vorabergebnis:    RCS-Gerät Gesamtkoloniezahl: 380/$m^3$
Durchführung:     Künstliche Belastung der Raumluft mit *Bacillus subtilis, Pseudomonas fluorescens* und *Staphylococcus aureus*. Gemessen wurde vorwiegend morgens und zum Teil abends, nachdem ein Ventilator 4 min eingeschaltet worden war.
Ergebnis:         s. nachfolgende Tabelle 2
Kommentar:        Nach Einbringung der Bakterinensuspension konnte bereits bei
                  EvL-Vernebelung nach einem Tag eine drastische Keimreduktion festgestellt werden. Schon nach einem Tag konnten keine Pseudomonaden oder *Bacillus subtilis* mehr in der Luft festgestellt werden, ebenfalls nach ca. 30 Stunden war kein *Staphylococcus aureus*- Keim in der Luft feststellbar. Das bedeutet für die Praxis, dass durch eine Anwendung mit EvL die Luft dauerhaft von *Bacillus subtilis* und *Staphylococcus aureus* als auch *Pseudomonas spec.* und somit auch *Legionella spp.* befreit werden kann.

Tabelle 2

| Kontrolltag | RCS/$m^3$ | Sedimentationsplatten (Ausstellzeit 30 min) | | | | | |
|---|---|---|---|---|---|---|---|
| | GKZ | vorn im Raum | | | hinten im Raum | | |
| | | GKZ | Staph. aureus | Pseudomonaden | GKZ | Staph. aureus | Pseudomonaden |
| 0 morgens | 8.600 | 1.300 | 1.900 | 640 | 1.560 | 2.400 | 570 |
| 1 morgens | 240* | 16 | 1 | < 1 | 10 | < 1 | < 1 |
| abends | 205* | 9 | < 1 | < 1 | 12 | < 1 | < 1 |
| 2 morgens | 105* | 1 | < 1 | < 1 | 3 | < 1 | < 1 |
| abends | 135* | 3 | < 1 | < 1 | 3 | < 1 | < 1 |
| 3 morgens | 15* | 1 | < 1 | < 1 | 1 | < 1 | < 1 |
| 4 morgens | 15*1 | 1 | < 1 | < 1 | < 1 | < 1 | < 1 |
| 5 morgens | 10*1 | 2* | < 1 | < 1 | | < 1 | < 1 |

* = keine *Bacillus subtilis,* keine *Pseudomonas spec.,* keine *Staph. aureus*

*1 = vorwiegend Schimmelpilze

Tabelle 2   (fortgesetzt)

| Kontrolltag | RCS/m³ GKZ | Sedimentationsplatten (Ausstellzeit 30 min) | | | | | |
| | | vorn im Raum | | | hinten im Raum | | |
| | | GKZ | Staph. aureus | Pseudomonaden | GKZ | Staph. aureus | Pseudomonaden |
| abends | 14*1 | 1* | < 1 | < 1 | 4* / 2* | < 1 | < 1 |
| 6 morgens | 40*1 | 5* | < 1 | < 1 | 6* | < 1 | < 1 |
| 7 morgens | 35*1 | 4* | < 1 | < 1 | 3* | < 1 | < 1 |

\* = keine *Bacillus subtilis,* keine *Pseudomonas spec.,* keine *Staph. aureus*

*1 = vorwiegend Schimmelpilze

Ausgangssuspension:   $9{,}8 \times 10^8$ *Bacillus subtilis*
$7{,}6 \times 10^8$ *Staphylococcus aureus*
$4{,}9 \times 10^8$ *Pseudomonas fluorescens*

Beispiel 3: Verifizierung von Anwendungen zur Entkeimung von Luft mittels der in Fig. 3 dargestellten Vorrichtung

EvL-Entkeimung von Luft

Anwendung:   Vernebeln in der Raumluft
Problematik:   Schimmel und Hefen
Dosierung:   0,02 - 0,1 ml EvL-Mittel pro $cm^3$ Luft/h
(Raum 32,8 $m^3$ ohne Klimaanlage)

Durchführung

Simulation folgenden Raumklimas:

| Temperatur | ca. 25 °C |
| Rel. Luftfeuchtigkeit | ca. 55 % |

Kontinuierliche Luftumwälzung mit dem in Fig. 3 gezeigten Verdampfungssystem; gezielte Kontaminierung mit *Penicillium commune, Cladosporium suaveolens, Aspergillus niger* und *Saccharomyces cerevisiae* ($5 \times 10^3/m^3$) und kontinuierliches Vernebeln des Raums mit EvL-Entkeimung von Luftmittel mittels Verdampfungs-Gerät. Dosierung: 0,02 - 0,1 ml/$m^3$/h EvL-Mittel.
Ziel/Ergebnis: Reduzierung von Schimmel und Hefen (Bakteriologie: Schimmel und Hefen) Probenahme (RCS und Sedimentationsplatten)
Am Tag vor der Anwendung; danach täglich, bis keine Reduzierung mehr feststellbar (2 x täglich morgens und abends an 2 Stellen Sedimentationsplatten, 1 x RCS)

Prüfbereich:   Raum ohne Klimaanlage von 32,8 $m^3$

Vorabergebnis

| RCS-Gerät | | Sedimentationsplatte (30 min) vorne hinten | | | |
|---|---|---|---|---|---|
| Hefen/m³ | Schimmel/m³ | Hefen | Schimmel | Hefen | Schimmel |
| 0 | 380 | 0 | 20 | 0 | 14 |

Durchführung: Künstliche Belastung der Raumluft mit *Aspergillus niger, Penicillium commune, Cladosporium suaveolens* und *Saccharomyces cerevisiae* am Tag 0 morgens
Gemessen wurde vormittags und nachmittags nachdem ein Ventilator 5 min eingeschaltet worden war.
Die EvL-Vernebelung begann am Tag 0 nachmittags.
Das Ergebnis ist in Tabelle 3 zusammengefasst.

Kommentar: Nach Einbringung der Schimmelpilze und Hefen ($5,2 \times 10^3$/m³) konnte bereits bei EvL Vernebelung am gleichen Tag eine Halbierung der Kontaminanten ($2 \times 10^3$/m³) festgestellt werden.

Am 2. Tag reduzierten sich die Schimmelpilze und Hefen um ca. 90 % der Ausgangsbelastung, d. h. auf $10^2$/m³.
Am 8. Tag (ca. 1 Woche) reduzierten sich der Wert auf $10^2$ - 10/m³ bzw. um 98 %.
Innerhalb der 2. Woche zeigte sich, dass EvL in der Lage ist, ein einmal erreichtes Bioklima aufrecht zu erhalten.
Das würde für die Praxis bedeuten, dass eine Langzeitanwendung mit EvL in der Luft dauerhaft eine niedrige Schimmelpilz-/Hefezahl erreicht.

Tabelle 3

| | | RCS/m³ | | Sedimentationsplatte (30 min, YGC-Agar) | | | |
|---|---|---|---|---|---|---|---|
| | | | | vorne | | hinten | |
| Kontrolltag | | Schimmel | Hefen | Schimmel | Hefen | Schimmel | Hefen |
| 0 | morgens | 5270 | - | 356 | - | 360 | - |
| | abends | 2273 | - | 41 | 1 | 48 | 1 |
| 1 | morgens | 655 | 20 | 13 | 32 | 31 | 32 |
| | abends | 465 | - | 16 | - | 17 | 1 |
| 2 | morgens | 495 | 25 | 28 | 37 | 22 | 42 |
| | abends | 365 | 6 | 13 | - | 12 | - |
| 3 | morgens | 290 | 25 | 7 | 1 | 12 | - |
| | abends | 335 | 10 | 7 | - | 10 | - |
| 4 | morgens | 420 | - | 18 | - | 22 | - |
| | abends | 295 | - | 8 | - | 12 | - |
| 5 | morgens | 315 | - | 14 | - | 7 | - |
| | abends | 345 | 5 | 13 | - | 17 | - |
| 6 | morgens | 285 | - | 7 | 1 | 1 | - |
| | abends | 275 | - | 7 | - | 6 | 1 |
| 7 | morgens | 185 | 5 | 4 | 5 | 4 | 2 |
| | abends | 95 | 30 | 5 | - | 5 | - |
| 8 | morgens | 105 | - | 1 | - | - | - |
| | abends | 85 | - | 4 | - | 3 | - |
| 9 | morgens | 205 | - | 5 | - | 9 | - |

EP 1 183 053 B1

Tabelle 3 (fortgesetzt)

| | | RCS/m$^3$ | | Sedimentationsplatte (30 min, YGC-Agar) | | | |
|---|---|---|---|---|---|---|---|
| | | | | vorne | | hinten | |
| Kontrolltag | | Schimmel | Hefen | Schimmel | Hefen | Schimmel | Hefen |
| | abends | 95 | - | 2 | - | 11 | - |
| 10 | morgens | 85 | - | 4 | 1 | 9 | 1 |
| | abends | 90 | - | 6 | - | 7 | - |
| 11 | morgens | 135 | - | 4 | - | 8 | - |
| | abends | 85 | - | 7 | - | 6 | - |
| 12 | morgens | 70 | - | 4 | 1 | 6 | 2 |
| | abends | 90 | - | 11 | - | 8 | - |
| 13 | morgens | 60 | - | 5 | - | 5 | - |
| | abends | 50 | - | 7 | - | 4 | - |

Das Bubbler-EvL-System von Beispiel 1 zeigte bereits nach einem Tag Einwirkung die höchste Effektivität, d. h. einen Reduktionsfaktor von RF LOG 5 (ca. 10000 auf 0). Das Zweistoffdüsensystem von Beispiel 2 zeigt eine geringere Effektivität, ist jedoch ausreichend. Das Verdampfungssystem von Beispiel 3 ist nur für kleine Räumlichkeiten effektiv einsetzbar. Das EvL(Entkeimung von Luft)-Mittel zeigt in allen Systemen hohe Wirksamkeit.

Beispiel 4:

Das erfindungsgemäße Verfahren wurde wie folgt durchgeführt, wobei eine nicht erfindungsgemäße Zusammensetzung verwendet wurde.

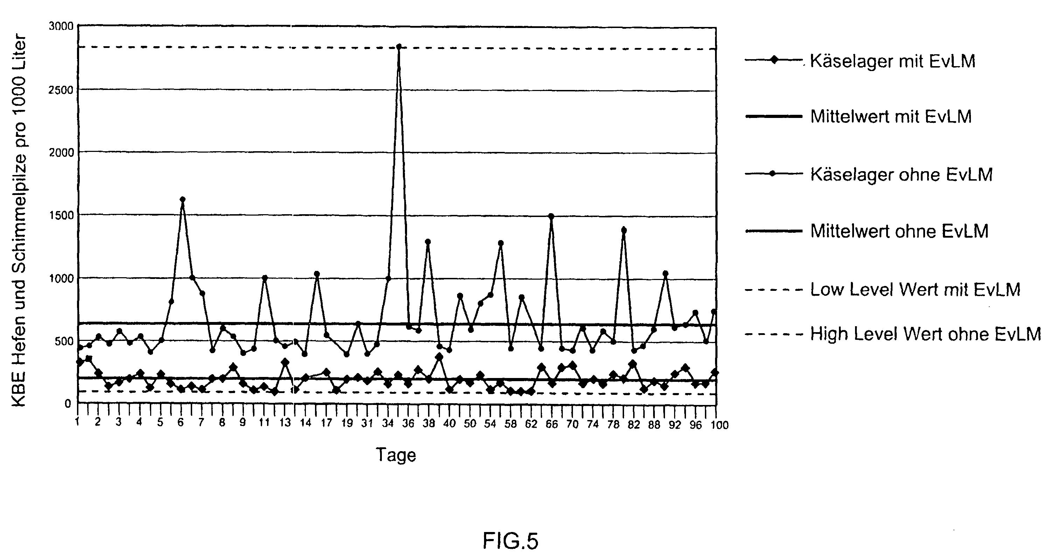

Die Raumluft eines Käsereifelagers wurde mit 50 ppt pro m$^3$/h EvL-Mittel versetzt und die auftretenden koloniebildenden Einheiten von Schimmelpilzen und Hefen auf dem reifenden Käse über 100 Tage bestimmt und mit denjenigen von originaler Käselagerluft (ohne EvL-Mittel) verglichen. Die Ergebnisse sind in Fig. 5 zusammengefasst. Hierbei bedeutet der Mittelwert ca. 70 % Keimreduktion und der Low Level Wert bis ca. 99 % Keimreduktion = Reinraumqualität bei 15 ppt Dosierung EvL-Mittel.

**Patentansprüche**

1. Antimikrobielle Zusammensetzung zur Entkeimung von Luft, die frei von Ethanol und Isopropanol ist und

   (a1) 0,1 bis 10 Gew.-% wenigstens eines aromatischen Aroma-Alkohols, ausgewählt aus Benzylalkohol, 2-Phenylethanol, 1-Phenylethanol, Zimtalkohol, Hydrozimtalkohol und 1-Phenyl-1-propanol,
   (a2) wenigstens 75 Gew.-% eines oder mehrerer hydrophiler Aroma-Alkohole, ausgewählt aus 1-Propanol, Glycerin, Propylenglykol und Acetoin, und
   (b2) wenigstens 0,01 Gew.-% wenigstens einer Aromasäure ausgewählt aus Essigsäure, Aconitsäure, Adipinsäure, Ameisensäure, Apfelsäure, Capronsäure, Hydrozimtsäure, Pelargonsäure, Milchsäure, Phenoxyessigsäure, Phenylessigsäure, Valeriansäure, iso-Valeriansäure, Zimtsäure, Citronensäure, Mandelsäure, Weinsäure, Fumarsäure, Tanninsäure und deren Derivaten

   enthält.

2. Antimikrobielle Zusammensetzung nach Anspruch 1, wobei der aromatische Aroma-Alkohol (a1) Benzylalkohol ist.

3. Antimikrobielle Zusammensetzung nach Anspruch 1 oder 2, weiterhin enthaltend

   (b1) 0,01 bis 10 Gew.-% Polyphenolverbindungen, ausgewählt aus Brenzcatechin, Resorcin, Hydrochinon, Phloroglucin, Pyrogallol, Usninsäure, Acylpolyphenolen, Ligninen, Anthocyanen, Fiavonen, Catechinen, Gallussäurederivaten, Kaffeesäure, Flavonoiden und Extrakten aus Camellia Primula.

**4.** Antimikrobielle Zusammensetzung nach einem oder mehreren der Ansprüche 1 bis 3, wobei der hydrophile Aroma-Alkohol (a2) Propylenglykol ist; und die hydrophile Säure (b2) ausgewählt ist aus Essigsäure, Aconitsäure, Apfelsäure, Milchsäure, Phenylessigsäure, Citronensäure, Mandelsäure, Weinsäure, Fumarsäure, Hydrozimtsäure und deren physiologischen Salzen.

**5.** Antimikrobielle Zusammensetzung nach einem oder mehreren der Ansprüche 1 bis 4, die 0,01 bis 10 Gew.-% Komponente (b1) enthält.

**6.** Antimikrobielle Zusammensetzung nach Anspruch 1, wobei die Komponente (a1) Benzylalkohol ist und die antimikrobielle Zusammensetzung 90 bis 99 Gew.-% hydrophilen Aroma-Alkohol (a2), insbesondere Propylenglykol enthält.

**7.** Antimikrobielle Zusammensetzung nach einem oder mehreren der Ansprüche 1 bis 6, die noch weitere Aromastoffe, ausgewählt aus

(c) Phenolen, ausgewählt aus Thymol, Methyleugenol, Acetyleugenol, Safrol, Eugenol, Isoeugenol, Anethol, Phenol, Methylchavicol, Carvacrol, α-Bisabolol, Fornesol, Anisol und Propenylguaethol,
(d) Estern, ausgewählt aus Allicin, iso-Amylacetat, Benzylacetat, Benzylphenylacetat, n-Butylacetat, Cinnamylacetat, Citronellylacetat, Ethylacetat, Eugenolacetat, Geranylacetat, Hexylacetat, Hydrocinnamylacetat, Linalylacetat, Octylacetat, Phenylethylacetat, Terpinylacetat, Triacetin, Kaliumacetat, Natriumacetat, Calciumacetat und Esterderivate der in Anspruch 1 definierten Säuren,
(e) Terpenen, ausgewählt aus Campher, Limonen und β-Caryophyllen,
(f) Acetalen, ausgewählt aus Acetal, Acetaldehyddibutylacetal, Acetaldehyddipropylacetal, Acetaldehydphenethylpropylacetal, Zimtaldehydethylenglykolacetal, Decanaldimethylacetal, Heptanaldimethylacetal, Heptanalglycerylacetal und Benzaldehydpropylenglykolacetal
(g) Aldehyden, ausgewählt aus Acetylaldehyd, Anisaldehyd, Benzaldehyd, iso-Butylaldehyd, Citral, Citronellal, n-Caprinaldehyd, Ethylvanillin, Fufurol, Heliotropin, Heptylaldehyd, Hexylaldehyd, 2-Hexenal, Hydrozimtaldehyd, Laurylaldehyd, Nonylaldehyd, Octylaldehyd, Phenylacetaldehyd, Propionaldehyd, Vanillin, Zimtaldehyd, Perillaaldehyd und Cuminaldehyd, und
(h) etherischen Ölen, ausgewählt aus etherischen Ölen und/oder alkoholischen, glykolischen oder durch $CO_2$-Hochdruckverfahren erhaltenen Extrakten aus den folgenden Pflanzen:

(h1) Öle bzw. Extrakte mit hohem Anteil an Alkoholen: Melisse, Koriander, Kardamon, Eukalyptus;
(h2) Öle bzw. Extrakte mit hohem Anteil an Aldehyden: Eukalyptus citriodora, Zimt, Zitrone, Lemongras, Melisse, Citronella, Limette, Orange;
(h3) Öle bzw. Extrakte mit hohem Anteil an Phenolen: Oreganum, Thymian, Rosmarin, Orange, Nelke, Fenchel, Campher, Mandarine, Anis, Cascarille, Estragon und Piment;
(h4) Öle bzw. Extrakte mit hohem Anteil an Acetaten: Lavendel;
(h5) Öle bzw. Extrakte mit hohem Anteil an Estern: Senf, Zwiebel, Knoblauch; und
(h6) Öle bzw. Extrakte mit hohem Anteil an Terpenen: Pfeffer, Pomeranze, Kümmel, Dill, Zitrone, Pfefferminz, Muskatnuß;

enthält.

**8.** Antimikrobielle Zusammensetzung nach Anspruch 7, die 0,001 bis 25 Gew.-%, vorzugsweise 0,01 bis 9 Gew.-%, der weiteren Aromastoffe (c) - (h) enthält.

**9.** Antimikrobielle Zusammensetzung nach Anspruch 7 oder 8, wobei die weiteren Aromastoffe Phenole (c) und/oder etherische Öle (h) sind.

**10.** Antimikrobielle Zusammensetzung nach einem oder mehreren der Ansprüche 1 bis 9, die ein oder zwei Aroma-Alkohole (a2) und wenigstens eine Polyphenolverbindung (b1), insbesondere Tannin, enthält.

**11.** Antimikrobielle Zusammensetzung nach Anspruch 10, die 0,1 - 10 Gew.-% Benzylalkohol und 0,01 - 10 Gew.-% Tannin enthält.

**12.** Antimikrobielle Zusammensetzung nach einem oder mehreren der Ansprüche 1 bis 11, insbesondere nach Anspruch 6, deren Wassergehalt kleiner als 35 Gew.-% ist, vorzugsweise 5 bis 25 Gew.-% beträgt.

**13.** Antimikrobielle Zusammensetzung nach einem oder mehreren der Ansprüche 1 bis 12, die

(i) weiterhin ein oder mehrwertige Alkohole mit 2 bis 10 C-Atomen, Emulgatoren, Stabilisatoren, Antioxidantien, Konservierungsmittel, Lösemittel und/oder Trägerstoffe enthält oder
(ii) ausschließlich aus Aromastoffen, wie in Ansprüchen 1 bis 12 definiert, besteht.

**14.** Verfahren zur Entkeimung von Luft, das das Verteilen oder Zerstäuben einer antimikrobiellen Zusammensetzung, wie in einem oder mehreren der Ansprüche 1 bis 13 definiert, umfasst, wobei durch das Verteilen oder Zerstäuben der antimikrobiellen Zusammensetzung eine Konzentration der antimikrobiellen Zusammensetzung von 0,001 bis 1 ml pro $m^3$ Luft eingestellt wird und/oder austauschende Luftsysteme so eingestellt werden, dass bei einer stündlichen Umwälzung 0,001 bis 1 ml antimikrobieller Zusammensetzung pro $m^3$ Luft zugegeben werden.

**15.** Verfahren nach Anspruch 14, wobei eine Dauerkonzentration von 5 bis 10 ppb der antimikrobiellen Zusammensetzung erzielt wird.

**16.** Verfahren nach Anspruch 14 oder 15, wobei das Zerstäuben der antimikrobiellen Zusammensetzung durch ein Zweistoffdüsensystem, Verdampfungssystem oder eine Bubbleranlage für die Luft bzw. in spezieller Ausführung für die Verpackung erfolgt.

**17.** Verwendung einer antimikrobiellen Zusammensetzung, wie in einem oder mehreren der Ansprüche 1 bis 13 definiert, zur Entkeimung von Luft, einschließlich der Luft in allen Arten von Verpackungen.


**Claims**

**1.** An antimicrobial composition for the disinfection of air which composition is free from ethanol and isopropanol and contains

(a1) from 0.1 to 10% by weight of at least one aromatic flavor alcohol selected from benzyl alcohol, 2-phenylethanol, 1-phenylethanol, cinnamic alcohol, hydrocinnamic alcohol, and 1-phenyl-1-propanol;

(a2) at least 75% by weight of one or more hydrophilic flavor alcohols selected from 1-propanol, glycerol, propylene glycol and acetoin; and

(b2) at least 0.01% by weight of at least one flavor acid selected from acetic acid, aconitic acid, adipic acid, formic acid, malic acid, capronic acid, hydrocinnamic acid, pelargonic acid, lactic acid, phenoxyacetic acid, phenylacetic acid, valeric acid, iso-valeric acid, cinnamic acid, citric acid, mandelic acid, tartaric acid, fumaric acid, tannic acid, and their derivatives.

**2.** The antimicrobial composition according to claim 1, wherein said aromatic flavor alcohol (a1) is benzyl alcohol.

**3.** The antimicrobial composition according to claim 1 or 2, further containing:

(b1) from 0.01 to 10% by weight of polyphenol compounds selected from catechol, resorcinol, hydroquinone, phloroglucinol, pyrogallol, usnic acid, acylpolyphenols, lignins, anthocyans, flavones, catechols, gallic acid derivatives, caffeic acid, flavonoids and extracts from Camellia, Primula.

**4.** The antimicrobial composition according to one or more of claims 1 to 3, wherein said hydrophilic flavor alcohol (a2) is propylene glycol and said hydrophilic acid (b2) is selected from acetic acid, aconitic acid, malic acid, lactic acid, phenylacetic acid, citric acid, mandelic acid, tartaric acid, fumaric acid, hydrocinnamic acid and their physiologically acceptable salts.

**5.** The antimicrobial composition according to one or more of claims 1 to 4 which contains from 0.01 to 10% by weight of component (b1).

**6.** The antimicrobial composition according to claim 1, wherein component (a1) is benzyl alcohol and said antimicrobial composition contains from 90 to 99% by weight of hydrophilic flavor alcohol (a2), especially propylene glycol.

7. The antimicrobial composition according to one or more of claims 1 to 6 which contains further flavoring agents selected from

(c) phenols selected from thymol, methyleugenol, acetyleugenol, safrol, eugenol, isoeugenol, anethole, phenol, methylchavicol, carvacrol, α-bis-abolol, fornesol, anisole and propenylguaethol;

(d) esters selected from allicin, iso-amyl acetate, benzyl acetate, benzylphenyl acetate, n-butyl acetate, cinnamyl acetate, citronellyl acetate, ethyl acetate, eugenol acetate, geranyl acetate, hexyl acetate, hydrocinnamyl acetate, linalyl acetate, octyl acetate, phenylethyl acetate, terpinyl acetate, triacetin, potassium acetate, sodium acetate, calcium acetate and ester derivatives of the acids defined in claim 1;

(e) terpenes selected from camphor, limonene and β-caryophyllene;

(f) acetals selected from acetal, acetaldehyde dibutyl acetal, acetaldehyde dipropyl acetal, acetaldehyde phenethyl propyl acetal, cinnamic aldehyde ethylene glycol acetal, decanal dimethyl acetal, heptanal dimethyl acetal, heptanal glyceryl acetal and benzaldehyde propylene glycol acetal;

(g) aldehydes selected from acetaldehyde, anisaldehyde, benzaldehyde, iso-butyl aldehyde, citral, citronellal, n-caprylic aldehyde, ethylvanillin, furfural, heliotropin, heptyl aldehyde, hexyl aldehyde, 2-hexenal, hydrocinnamic aldehyde, lauryl aldehyde, nonyl aldehyde, octyl aldehyde, phenylacetaldehyde, propionaldehyde, vanillin, cinnamic aldehyde, perillaldehyde and cuminaldehyde; and

(h) essential oils selected from essential oils and/or alcoholic or glycolic extracts or extracts obtained by $CO_2$ high-pressure processes from the following plants:

(h1) oils or extracts having a high content of alcohols: melissa, coriander, cardamon, eucalyptus;

(h2) oils or extracts having a high content of aldehydes: Eucalyptus citriodora, cinnamon, lemon, lemon grass, melissa, citronella, lime, orange;

(h3) oils or extracts having a high content of phenols: origanum, thyme, rosemary, orange, clove, fennel, camphor, mandarin, anise, cascarilla, estragon and pimento;

(h4) oils or extracts having a high content of acetates: lavender;

(h5) oils or extracts having a high content of esters: mustard, onion, garlic; and

(h6) oils or extracts having a high content of terpenes: pepper, bitter orange, caraway, dill, lemon, peppermint, nutmeg.

8. The antimicrobial composition according to claim 7 which contains from 0.001 to 25% by weight, preferably from 0.01 to 9% by weight, of said further flavoring agents (c) to (h).

9. The antimicrobial composition according to claim 7 or 8, wherein said further flavoring agents are phenols (c) and/or essential oils (h).

10. The antimicrobial composition according to one or more of claims 1 to 9 which contains one or two flavor alcohols (a2) and at least one polyphenol compound (b1), especially tannin.

11. The antimicrobial composition according to claim 10 which contains from 0.1 to 10% by weight of benzyl alcohol and from 0.01 to 10% by weight of tannin.

12. The antimicrobial composition according to one or more of claims 1 to 11, especially according to claim 6, the water content of which is less than 35% by weight, preferably from 5 to 25% by weight.

13. The antimicrobial composition according to one or more of claims 1 to 12 which

(i) further contains monohydric or polyhydric alcohols having from 2 to 10 carbon atoms, emulsifiers, stabilizers, antioxidants, preservatives, solvents, and/or carrier materials; or

(ii) exclusively consists of flavoring agents as defined in claims 1 to 12.

14. A method for the disinfection of air, comprising the distributing or atomizing of an antimicrobial composition as defined in one or more of claims 1 to 13, wherein a concentration of the antimicrobial composition of from 0.001 to 1 ml per $m^3$ of air is adjusted by said distributing or atomizing of said antimicrobial composition, and/or exchanging air systems are adjusted to achieve a dosage of from 0.001 to 1 ml of antimicrobial composition is added per $m^3$ of air in an hourly recirculation.

**15.** The method according to claim 14, wherein a permanent concentration of from 5 to 10 ppb of said antimicrobial composition is achieved.

**16.** The method according to claim 14 or 15, wherein said atomizing of said antimicrobial composition is effected by a two-fluid nozzle system, evaporation system or a bubbler installation for the air, or in a special design for packaging.

**17.** Use of an antimicrobial composition as defined in one or more of claims 1 to 13 for the disinfection of air including the air in all kinds of packages.

**Revendications**

**1.** Composition antimicrobienne destinée à la stérilisation de l'air, exempte d'éthanol et d'isopropanol et qui contient

(a1) 0,1 à 10 % en poids d'au moins un alcool aromatisé aromatique, choisi parmi l'alcool benzylique, l'éthanol 2-phénylique, l'éthanol 1-phénylique, l'alcool cinnamique, l'alcool hydrocinnamique et le 1-phényl-1-propanol,
(a2) au moins 75 % en poids d'un ou plusieurs alcools aromatisés hydrophiles, choisis parmi le 1-propanol, le glycérol, le propylène glycol et l'acétoïne et
(b2) au moins 0,01 % en poids d'au moins un acide aromatique choisi parmi l'acide acétique, l'acide aconitique, l'acide adipique, l'acide formique, l'acide malique, l'acide caproïque, l'acide hydrocinnamique, l'acide pélargonique, l'acide lactique, l'acide phénoxyacétique, l'acide phénylacétique, l'acide valérianique, l'acide iso-valérianique, l'acide cinnamique, l'acide citrique, l'acide mandélique, l'acide tartrique, l'acide fumarique, l'acide tannique et leurs dérivés.

**2.** Composition antimicrobienne selon la revendication 1, dans laquelle l'alcool aromatisé aromatique (a1) est de l'alcool benzylique.

**3.** Composition antimicrobienne selon la revendication 1 ou 2, contenant en outre

(b1) 0,01 à 10 % en poids de composés de polyphénol, choisis parmi la pyrocatéchine, la résorcine, l'hydroquinone, la phloroglucine, le pyrogallol, l'acide usnique, les acylpolyphénols, les lignines, les anthocyanes, les flavones, les catéchines, les dérivés de l'acide biliaire, l'acide caféïque, les flavonoïdes et les extraits de Camellia Primula.

**4.** Composition antimicrobienne selon l'une quelconque ou plusieurs des revendications 1 à 3, dans laquelle l'alcool aromatisé hydrophile (a2) est du propylène glycol ; et l'acide hydrophile (b2) est choisi parmi l'acide acétique, l'acide aconitique, l'acide malique, l'acide lactique, l'acide phénylacétique, l'acide citrique, l'acide mandélique, l'acide tartrique, l'acide fumarique, l'acide hydrocinnamique et leurs sels physiologiques.

**5.** Composition antimicrobienne selon l'une quelconque ou plusieurs des revendications 1 à 4 qui contient 0,01 à 10 % en poids de composant (b1).

**6.** Composition antimicrobienne selon la revendication 1, dans laquelle le composant (a1) est de l'alcool benzylique et la composition antimicrobienne contenant 90 à 99 % en poids d'alcool aromatisé hydrophile (a2), en particulier du propylène glycol.

**7.** Composition antimicrobienne selon l'une quelconque ou plusieurs des revendications 1 à 6 qui contient encore d'autres substances aromatisantes choisies parmi

(c) les phénols, choisis parmi le thymol, le méthyleugénol, l'acétyleugénol, le safrol, l'eugénol, l'isoeugénol, l'anéthol, le phénol, le méthylchavicol, le carvacrol, l'$\alpha$-bisabolol, le fornésol, l'anisol et le propénylguaéthol,
(d) les esters, choisis parmi l'allicine, l'acétate d'iso-amyle, l'acétate de benzyle, le phénylacétate de benzyle, l'acétate de n-butyle, l'acétate de cinnamyle, l'acétate de citronellyle, l'acétate d'éthyle, l'acétate d'eugénol, l'acétate de géranyle, l'acétate d'hexyle, l'acétate d'hydrocynnamyle, l'acétate de linalyle, l'acétate d'octyle, l'acétate de phényléthyle, l'acétate de terpinyle, la triacétine, l'acétate de potassium, l'acétate de sodium, l'acétate de calcium et les dérivés d'esters des acides définis dans la revendication 1,
(e) les terpènes, choisis parmi le camphre, les limons et les $\beta$-caryophylles,

(f) les acétals, choisis parmi l'acétal, l'acétaldéhyde dibutylacétal, l'acétaldéhyde dipropylacétal, l'acétaldéhyde phénéthylpropylacétal, l'acétal éthylène glycol aldéhyde cinnamique, le décanaldiméthylacétal, l'heptanaldiméthylacétal, l'heptanalglycérylacétal et le benzaldéhyde propylène glycol acétal,

(g) les aldéhydes, choisis parmi l'aldéhyde acétylique, l'anisaldéhyde, le benzaldéhyde, l'aldéhyde isobutylique, le citral, le citronellal, l'aldéhyde n-caprique, l'éthylvanilline, le furfurol, l'héliotropine, l'aldéhyde heptylique, l'aldéhyde hexylique, le 2-hexénal, l'aldéhyde hydrocinnamique, l'aldéhyde laurylique, l'aldéhyde nonylique, l'aldéhyde octylique, l'acétaldéhyde phénylique, l'aldéhyde propionique, la vanilline, l'aldéhyde cinnamique, l'aldéhyde de Perilla et l'aldéhyde de cumin et

(h) les huiles éthériques, choisies parmi les huiles éthériques et/ou les extraits des plantes suivantes obtenus par des procédés haute pression alcooliques, glycoliques ou $CO_2$:

(h1): huiles ou extraits avec une forte proportion d'alcools : mélisse, coriandre, cardamome, eucalyptus ;
(h2) huiles ou extraits avec une forte proportion d'aldéhydes : Eucalyptus citriodora, cannelle, citron, lemongrass, mélisse, citronnelle, limette, orange ;
(h3) huiles ou extraits contenant une forte proportion de phénols : origan, thym, romarin, orange, clou de girofle, fenouil, camphre, mandarine, anis, cascarille, estragon et piment ;
(h4) huiles ou extraits contenant une forte proportion d'acétates : lavande ;
(h5) huiles ou extraits contenant une forte proportion d'esters : moutarde, oignons, ail ; et
(h6) huiles ou extraits contenant une forte proportion de terpène : poivre, oranges amères, cumin, aneth, citron, menthe, noix de muscade.

8. Composition antimicrobienne selon la revendication 7, qui contient 0,001 à 25 % en poids, de préférence 0,01 à 9 % en poids des autres substances aromatisantes (c) - (h).

9. Composition antimicrobienne selon la revendication 7 ou 8, dans laquelle les autres substances aromatisantes sont des phénols (c) et/ou des huiles éthériques (h).

10. Composition antimicrobienne selon l'une quelconque ou plusieurs des revendications 1 à 9, qui contient un ou deux alcools aromatiques (a2) et au moins un composé de polyphénol (b1), en particulier un tannin.

11. Composition antimicrobienne selon la revendication 10, qui contient 0,1 à 10 % en poids d'alcool benzylique et 0,01 à 10 % en poids de tannin.

12. Composition antimicrobienne selon l'une quelconque ou plusieurs des revendications 1 à 11, en particulier selon la revendication 6, dont la teneur en eau est inférieure à 35 % en poids, de préférence comprise entre 5 et 25 % en poids.

13. Composition antimicrobienne selon l'une quelconque ou plusieurs des revendications 1 à 12, qui

(i) contient en outre un ou plusieurs alcools polyvalents ayant 2 à 10 atomes de C, des émulsifiants, des stabilisants, des antioxydants, des agents de conservation, des solvants et/ou des substrats ou
(ii) est exclusivement constituée de substances aromatisantes, telles que définies dans les revendications 1 à 12.

14. Procédé de stérilisation de l'air, qui englobe la répartition ou l'atomisation d'une composition antimicrobienne telle que définie dans l'une quelconque ou plusieurs des revendications 1 à 13, dans lequel la répartition ou l'atomisation de la composition antimicrobienne permet l'ajustement d'une concentration de la composition antimicrobienne de 0,001 à 1 ml par $m^3$ d'air et/ou des systèmes d'échange d'air sont réglés de manière à ajouter 0,001 à 1 ml de composition antimicrobienne par $m^3$ d'air lors d'une circulation toutes les heures.

15. Procédé selon la revendication 14, dans lequel une concentration permanente de 5 à 10 ppb de la composition antimicrobienne est obtenue.

16. Procédé selon la revendication 14 ou 15, dans lequel l'atomisation de la composition antimicrobienne est assurée par un système de buses binaire, un système de vaporisation ou une installation à bulles pour l'air ou, dans une réalisation spéciale, pour l'emballage.

17. Utilisation d'une composition antimicrobienne, comme définie dans l'une quelconque ou plusieurs des revendications 1 à 13, destinée à la stérilisation de l'air, y compris de l'air dans tous les types d'emballages.

FIG.1

FIG.2

EvL-Verdampfungssystem

FIG.3

FIG.4

FIG.5

FIG.6

FIG.7